# EUROPEAN PATENT APPLICATION

(11) **EP 4 835 015 A1**
(43) Date of publication of application: **04.11.2026**
(21) Application number: 24913690.4
(22) Date of filing: 27.12.2024
(51) Int. Cl.: C09D 5/16, C09D 5/00, C09D 5/28, C09D 7/42, C09D 4/00, C09D 4/06, C09D 151/00, C08F 290/04

(54) **FLOORING MATERIAL AND MANUFACTURING METHOD THEREFOR**

(30) Priority: 29.12.2023 KR 20230195928
(71) Applicant: LX Hausys, Ltd., Seoul 04637 (KR)
(72) Inventor: HAN, Yongwoon, Seoul 07796 (KR); TAK, Hyowon, Seoul 07796 (KR); KIM, Jaehoon, Seoul 07796 (KR); YANG, Heegyeong, Seoul 07796 (KR); LEE, Bobin, Seoul 07796 (KR)
(74) Representative: Goddar, Heinz J.
(86) International application number: PCT/KR2024/021303
(87) International publication number: WO 2025/143886

(57) **Abstract**

The present invention relates to a flooring material including a base layer and a surface treatment layer, wherein the surface treatment layer has a surface structure including 21 to 100 wrinkles per unit area (0.1 mm × 0.1 mm), a surface gloss of 4 or less under a 60° gloss condition, and a surface gloss of 30 or less under an 85° gloss condition, and to a method for manufacturing the flooring material.

## Description

### [Technical Field]

This application claims priority to and the benefit of Korean Patent Application No. 10-2023-0195928 filed in the Korean Intellectual Property Office on December 29, 2023, the entire contents of which are incorporated herein by reference.

The present invention relates to a flooring material having a small gloss change.

### [Background Art]

Generally, flooring materials provide a hygienic space by blocking dust and cold air from a cement floor, and have aesthetically pleasing patterns of various colors printed thereon, thereby also providing decorative effects such as changing an indoor atmosphere to be cozy according to customer preferences. Such flooring materials of the related art have a problem in that, when a surface thereof is stained with contaminants, traces of the contaminants cannot be easily removed by a user, and thus the flooring materials having such traces cannot fulfill their basic functions.

To address such a problem, a surface treatment layer is formed on an uppermost layer of a flooring material, thereby providing not only scratch resistance but also stain resistance.

However, in this case, the surface treatment layer renders the surface of the flooring material smooth, thereby reducing non-slip properties and causing a problem in that pedestrian safety is significantly lowered. In addition, the flooring materials of the related art have a limitation in that stain resistance decreases as gloss decreases, thereby significantly reducing functions such as cleaning, and thus it is difficult to impart natural gloss as in natural materials, while maintaining high stain resistance. Specifically, flooring materials of the related art to which stain resistance is imparted have a problem in that, when stained with an oil-based marker and other contaminants, the stains can be removed when the gloss is at or above a certain level as measured at 60° using a gloss meter, but below that level, stain resistance cannot be exhibited, and stain resistance is rapidly reduced due to abrasion of silicone contained in a UV-curable surface treatment agent for a surface of the flooring material. In addition, UV-curable surface treatment agents of the related art include silica as a matting agent in an amount of about 10 wt% based on the total weight in order to reduce gloss of a treated flooring material. However, silica is porous and has a very low apparent specific gravity. Accordingly, as the content increases, fine dust, moisture, and oil contaminants are easily adsorbed, thereby rapidly reducing stain resistance. In addition, stains such as hand and foot sweat stains remain on a surface of the surface-treated flooring material, resulting in a phenomenon in which the appearance becomes cloudy as if fogged.

Therefore, there is an urgent need to develop a flooring material that achieves low gloss of the flooring material while excluding a matting agent including inorganic particles and the like or using a very small amount thereof, and improves stain resistance such that contaminants do not easily adhere to a surface of the flooring material.

### [Detailed Description of the Invention]

### [Technical Problem]

The present invention has been made in an effort to provide an ultra-matte flooring material having a small gloss change.

### [Technical Solution]

The present invention provides a flooring material including a base layer and a surface treatment layer, wherein the surface treatment layer has a surface structure including 21 to 100 wrinkles per unit area (0.1 mm × 0.1 mm), a surface gloss of 4 or less under a 60° gloss condition, and a surface gloss of 30 or less under an 85° gloss condition.

Another exemplary embodiment of the present invention provides a method for manufacturing a flooring material, the method including a first light irradiation step of irradiating an acrylic resin composition applied on a base layer with light having a wavelength of 100 nm to 450 nm in air to cure a surface of the composition, a second light irradiation step of irradiating the surface-cured composition with light having a wavelength of less than 300 nm under a nitrogen gas (N₂) condition to induce wrinkles on a surface of the surface-cured composition, and a third light irradiation step of irradiating the composition having wrinkles induced on the surface with light having a wavelength of 100 nm to 450 nm to form a surface treatment layer, wherein the surface treatment layer has a surface structure including 21 to 100 wrinkles per unit area (0.1 mm × 0.1 mm), a surface gloss of 4 or less under a 60° gloss condition, and a surface gloss of 30 or less under an 85° gloss condition.

### [Advantageous Effects]

A flooring material according to an exemplary embodiment of the present invention has excellent stain resistance and non-slip properties.

A flooring material according to another exemplary embodiment of the present invention can achieve a very low surface gloss as measured at 60° and 85° using a gloss meter.

A flooring material of another exemplary embodiment of the present invention can form densely distributed wrinkles regardless of valleys and ridges of an embossed structure, and can achieve ultra-matte surface gloss.

### [Brief Description of Drawings]

FIG. 1 is a scanning electron microscope (SEM) image of a surface of a sample prepared in Example 1.
FIG. 2 is a scanning electron microscope image of a surface of a sample prepared in Comparative Example 1.
FIG. 3 is a scanning electron microscope image of a surface of a sample prepared in Comparative Example 2.
FIG. 4 is a scanning electron microscope image of a surface of a sample prepared in Comparative Example 3.
FIG. 5 is a scanning electron microscope image of a surface of a sample prepared in Example 2.
FIG. 6 is a scanning electron microscope image of a surface of a sample prepared in Comparative Example 4.
FIG. 7 is a scanning electron microscope image of a surface of a sample prepared in Comparative Example 5.
FIG. 8 is a scanning electron microscope image of a surface of a sample prepared in Comparative Example 6.
FIG. 9 is a structural diagram illustrating an example of a photocuring apparatus used in the manufacture of a surface treatment layer according to an exemplary embodiment of the present invention.

### <Explanation of Reference Numerals and Symbols>

100: photocuring apparatus
110: light irradiation chamber
111: first light irradiator (UV irradiator)
112: second light irradiator (UV irradiator)
113: third light irradiator (UV irradiator)
120: irradiated light
130: conveyor belt
140: gas barrier
150: specimen

### [Best Mode]

The present invention will be described in detail below.

The present invention may be variously modified and may have various exemplary embodiments, and specific exemplary embodiments will be illustrated in the drawings and described in detail in the following description.

However, it should be understood that the description of the exemplary embodiments is not intended to limit the present invention to the specific exemplary embodiments, and that the present invention is to cover all modifications, equivalents and alternatives falling within the spirit and technical scope of the present invention.

In the present application, it should be understood that terms such as "including (comprising)" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

The present invention relates to an ultra-matte flooring material having a small gloss change and a method for manufacturing the same.

Flooring materials of the related art have a problem in that, when a surface thereof is stained with contaminants, traces of the contaminants cannot be easily removed by a user, and thus the flooring materials having such traces cannot fulfill their basic functions. To address such a problem, a surface treatment layer is formed on an uppermost layer of a flooring material, thereby providing the flooring material with not only scratch resistance but also stain resistance.

However, in this case, the surface treatment layer renders the surface of the flooring material smooth, thereby reducing non-slip properties and causing a problem in that pedestrian safety is significantly lowered. In addition, the flooring materials of the related art have a limitation in that stain resistance decreases as gloss decreases, thereby significantly reducing functions such as cleaning, and thus it is difficult to impart natural gloss as in natural materials, while maintaining high stain resistance. Specifically, flooring materials of the related art to which stain resistance is imparted have a problem in that, when stained with an oil-based marker and other contaminants, stain resistance cannot be exhibited when the gloss is at or below a certain level as measured at 60° using a gloss meter, and stain resistance is rapidly reduced due to abrasion of silicone contained in a UV-curable surface treatment agent for a surface of the flooring material. In addition, UV-curable surface treatment agents of the related art include silica as a matting agent in an amount of about 10 wt% based on the total weight in order to reduce gloss of a treated flooring material. However, silica is porous and has a very low apparent specific gravity. Accordingly, as the content increases, fine dust, moisture, and oil contaminants are easily adsorbed, thereby rapidly reducing stain resistance. In addition, stains such as hand and foot sweat stains remain on a surface of the surface-treated flooring material, resulting in a phenomenon in which the appearance becomes cloudy as if fogged.

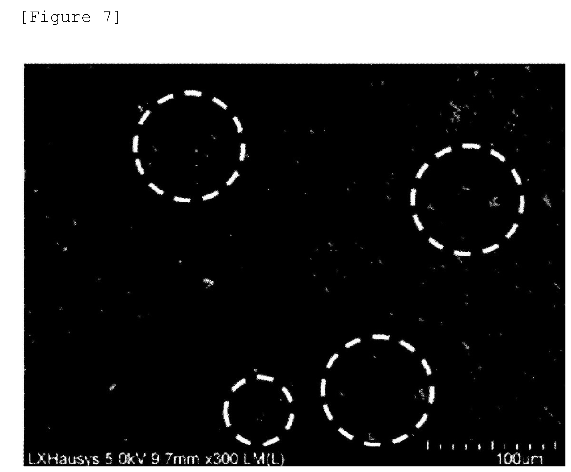

When an ultra-matte surface treatment layer is manufactured by a general curing method in which a matting agent is added, it can be confirmed, as shown in FIG. 7, that gloss changes due to particle detachment during rubbing.

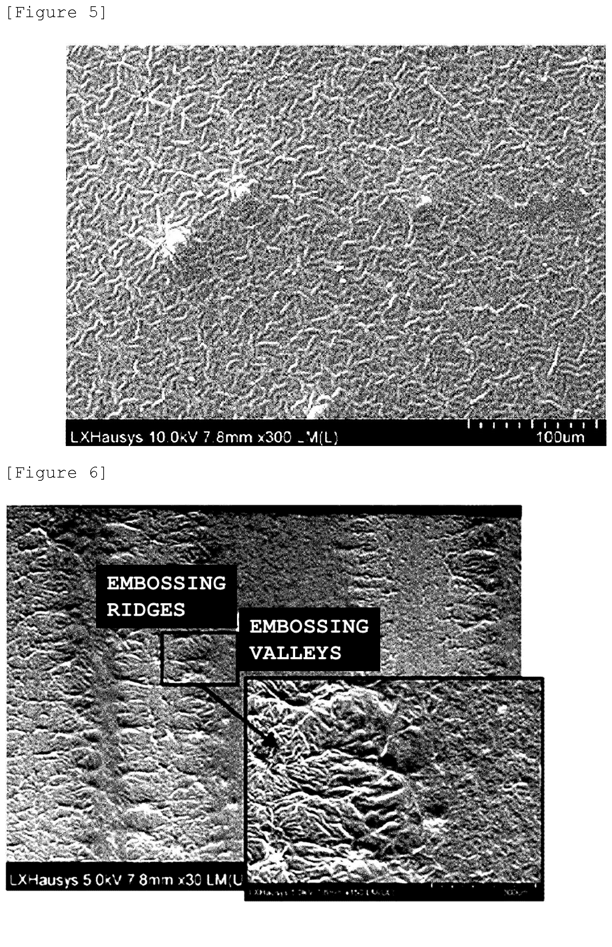

When ultra-matte is achieved by surface wrinkles formed by 2-step curing, there is a problem in that, as shown in FIG. 6, wrinkle shapes at valleys and ridges of embossing differ, thereby causing differences in surface gloss and physical properties. In addition, in this case, it was confirmed that, although particle detachment during rubbing was small, a change in gloss during rubbing was large due to a large difference in gloss between valleys and ridges of embossing.

On the other hand, it can be confirmed that, in FIG. 5, in which ultra-matte is achieved by surface wrinkles formed by 3-step curing, a difference in gloss between deep valley and ridges of embossing is small, and it can also be confirmed that there is no particle detachment during rubbing and a change in gloss during rubbing is small.

Hereinafter, the present invention will be described in more detail.

In an exemplary embodiment, the present invention provides a flooring material having a surface treatment layer formed from an acrylic resin composition and arranged on a base layer.

The flooring material according to an exemplary embodiment of the present invention is an indoor flooring material used in homes or offices, and the surface treatment layer is a cured layer of an acrylic resin composition and is located at an uppermost layer of the flooring material. Here, the acrylic resin composition includes an acrylate-based oligomer and a monomer, and may optionally include a matting agent together with these components to secure elongation of the surface treatment layer.

The flooring material of the present invention can improve stain resistance, water contact angle, non-slip properties, and the like, together with elongation of the surface, by introducing a fine wrinkle structure into a surface structure of the surface treatment layer.

Here, a "wrinkled surface" means that the resin layer includes wrinkles on at least one surface thereof and has three-dimensional surface irregularities due to the wrinkles. For example, the surface has irregularities including large and small ridges, valleys, and wrinkles formed therefrom that can be visually recognized in a predetermined shape. Each of the ridges, valleys, and wrinkles may have a regular or irregular shape. Such a wrinkled surface may also be referred to as a surface having a fine folding structure.

When a wrinkled surface of a resin layer is observed in a direction normal to the resin layer, ridges, valleys, wrinkles, and irregularities formed therefrom are observed over the entire region of the surface, for example, while undergoing a curing process described below.

The wrinkles may be observed in a form including a line shape having directionality (for example, a straight line and a curved line). For example, wrinkles on the surface formed by repeated straight and curved shapes may provide the surface of the resin layer with undulations like a mountain range. The surface irregularity structure formed by wrinkles having a line shape is clearly distinguishable from a so-called point-wise irregularity shape formed by using particles in a composition for forming a resin layer or by employing an emulsion dispersion method.

In addition, the surface treatment layer may include wrinkles that can be visually recognized in a predetermined size and shape. For example, the wrinkles may have a linear shape (a straight line or a curved line) having a width from a nanometer (nm) level (less than about 1 µm) to a micrometer (µm) level and extending several micrometers (µm) or more. A width and/or a height of the wrinkles and a length over which the wrinkles extend may be determined from an image (for example, SEM) of a wrinkled surface, as shown in the accompanying drawings. In addition, the length in the extension direction may be greater than the width. Specifically, ends of wrinkles extending in the straight or curved shape may be incorporated into the resin layer while forming an inclination in which the height gradually decreases. In some cases, the end of one wrinkle having the above-described size and shape may become a starting point of another wrinkle or a connection point with another wrinkle. In addition, when a cross-sectional curve near the wrinkles is observed in a direction perpendicular to an extension direction of the wrinkles, the width of the wrinkles may be incorporated into the resin layer while forming an inclination in which the height gradually decreases in both directions from a point or portion (for example, a ridge) forming the height of the wrinkles. Note that, when a ridge and a valley adjacent thereto form a wrinkle or a portion thereof, a region of a shape, which is visually recognized including the valley, may be seen as the width of the wrinkle.

For example, the width of the wrinkle may be 50 µm or less. Specifically, the width of the wrinkle may have an upper limit of 45 µm or less, 40 µm or less, 35 µm or less, 30 µm or less, 25 µm or less, 20 µm or less, 19 µm or less, 18 µm or less, 17 µm or less, 16 µm or less, 15 µm or less, 14 µm or less, 13 µm or less, 12 µm or less, or 11 µm or less, and may have a lower limit of 1 µm or more, 2 µm or more, 3 µm or more, or 4 µm or more. When the above range is satisfied, the wrinkled surface may be advantageous for exhibiting stain resistance and matte properties.

In addition, the length over which the wrinkles extend may have an upper limit of 200 µm or less, 100 µm or less, 50 µm or less, 40 µm or less, 30 µm or less, 20 µm or less, 15 µm or less, 11 µm or less, or 10 µm or less, and may have a lower limit of 1 µm or more, 2 µm or more, 3 µm or more, 4 µm or more, 5 µm or more, 10 µm or more, 20 µm or more, 30 µm or more, 40 µm or more, 50 µm or more, 60 µm or more, 70 µm or more, 80 µm or more, or 90 µm or more. When the above range is satisfied, the wrinkled surface may be advantageous for exhibiting stain resistance and matte properties.

The wrinkles may have a predetermined height over most of the length over which they extend. For example, the wrinkles may have a height of 2 µm or less, 1.5 µm or less, 1.0 µm or less, or 0.1 to 0.9 µm. Specifically, when a cross-sectional curve of the wrinkles is observed in a direction perpendicular to an extension direction of the wrinkles, a point or portion (for example, a ridge) forming the height of the wrinkles and a point or portion (for example, a valley) of the resin layer into which the width of the wrinkles is incorporated may have a height difference of 2 µm or less. The present invention can prevent a reduction in stain resistance caused by contaminants remaining between the wrinkles due to thick wrinkles by controlling the height of the wrinkles to the above range.

Note that, the phrase "most of a length in which a height is observed" refers to a length of 70% or more, 75% or more, 80% or more, 85% or more, or 90% or more, or 95% or more of a length over which the wrinkle continuously extends along its shape. When the height difference gradually decreases in the extension direction of the wrinkles and the height becomes significantly lower, a shape in which end portions of the wrinkles are incorporated into the resin layer may be observed, or a shape in which contact with other wrinkles different in size or shape begins may be observed. In the latter case, a more complex wrinkle structure may form surface irregularities.

The wrinkles are observed over the entire region of the surface, and may form surface wrinkles or irregularities while exhibiting a regular or irregular distribution. For example, on the surface, the wrinkles may form surface irregularities while having a shape in which a plurality of wrinkles branch in different directions from a single identifiable point. Specifically, on the surface, the wrinkles may have shapes similar to "Y" or "〈". In this case, the wrinkles having shapes similar to "Y" or "〈" may be densely arranged to form surface irregularities.

The present invention can increase frequency of finer wrinkles by forming wrinkles having the above-described shapes and/or sizes on the surface treatment layer, thereby lowering gloss without using a matting agent or by using even a small amount of a matting agent in the surface treatment layer, can prevent surface staining due to contaminants remaining between the wrinkles, and can improve wax affinity of the surface.

As an example, the flooring material may include 21 to 100 wrinkles per unit area (0.1 mm × 0.1 mm) of a surface of the surface treatment layer. Specifically, on the surface of the surface treatment layer of the flooring material, 21 to 90, 25 to 90, 30 to 85, 30 to 80, 35 to 80, or 40 to 80 wrinkles per unit area (0.1 mm × 0.1 mm) may be present.

As an example, on the surface treatment layer, a distance between any one wrinkle and an adjacent wrinkle may be from 1 µm to 15 µm. Specifically, a distance between adjacent peaks of the wrinkles may be from 1 µm to 15 µm. Specifically, a distance between adjacent valleys of the wrinkles may also be from 1 µm to 15 µm.

The surface treatment layer of the flooring material has embossing formed in addition to wrinkles. It is preferable that elongation of the surface treatment layer is secured so that cracks do not occur due to formation of embossing, and specifically, when tension is applied at 120°C until cracks occur, the elongation of the surface treatment layer may be from 1% to 20%. Specifically, the elongation of the surface treatment layer may be 10% or more and 20% or less, or 11% or more and 19% or less.

As an example, the flooring material according to an exemplary embodiment of the present invention includes, as an outermost layer, a surface treatment layer achieving hydrophobicity on the surface and having a dense wrinkle structure, and thus may have excellent stain resistance. For example, the surface treatment layer may achieve hydrophobicity on the surface and may have an average static water contact angle indicating affinity for water of 80° to 120° as measured, specifically, 80° to 115°, 80° to 110°, 80° to 105°, 80° to 100°, 85° to 100°, 85° to 105°, 85° to 110°, 85° to 115°, 85° to 120°, 90° to 120°, 90° to 110°, 90° to 100°, 90° to 98°, 90° to 95°, 90° to 93°, 93° to 100°, 95° to 100°, 95° to 98°, 90° to 92°, or 88° to 94°.

In addition, the flooring material according to an exemplary embodiment of the present invention may have improved surface stain resistance, and in a cleanability test according to KS M 3802 using an oil-based marker as a contaminant, a staining grade may be 4 or higher. Specifically, when a flooring material according to an exemplary embodiment of the present invention is stained with an oil-based marker and, after 30 seconds, the oil-based marker is wiped off with a Kimwipe and a degree of surface damage of the flooring material is visually confirmed, a staining grade of the flooring material may range from grade 4 (residual contaminant area based on an initial contaminated area: 5% or more and less than 20%) to grade 5 (residual contaminant area based on an initial contaminated area: less than 5%), and specifically may be grade 5.

As another example, the flooring material according to an exemplary embodiment of the present invention may induce scattering of light incident on the surface through a dense wrinkle structure formed on the surface of the surface treatment layer, thereby achieving significantly low gloss by including only a very small amount of a matting agent in the surface treatment layer or, in some cases, even without a matting agent. Specifically, the flooring material may have a surface gloss of 4 or less as measured at 60° using a gloss meter, and more specifically, an upper limit thereof may be 3.5 or less, 3 or less, 2.5 or less, or 2.3 or less, and a lower limit thereof may be 0.1 or more, 0.5 or more, 1 or more, 1.1 or more, or 2 or more. For example, an average surface gloss of the flooring material may be from 0.1 to 4, from 0.1 to 3.5, from 0.1 to 3, 0.1 to 2.8, from 0.1 to 2.4, from 0.5 to 1.8, from 3.2 to 4, 0.1 to 0.4, from 0.5 to 4, from 0.5 to 3, from 1 to 2.5, from 1 to 2.2, from 1.7 to 2.9, from 0.8 to 1.9, from 1.3 to 2.2, from 1.2 to 1.7, from 1.8 to 2.2, or from 1.3 to 2.4.

As another example, the flooring material according to an exemplary embodiment of the present invention may induce scattering of light incident on the surface through a dense wrinkle structure formed on the surface of the surface treatment layer, thereby achieving significantly low gloss even with a very small amount of a matting agent in the surface treatment layer or, in some cases, even without using a matting agent. Specifically, the flooring material may have a surface gloss of 30 or less as measured at 85° using a gloss meter (85° gloss condition), and more specifically, an upper limit thereof may be 29 or less, 28 or less, 27 or less, 26 or less, 25 or less, 24 or less, 23 or less, 22 or less, 21 or less, 20 or less, 19 or less, 18 or less, 17 or less, 16 or less, 15 or less, 14 or less, 13 or less, 12 or less, 11 or less, or 10 or less, and an lower limit thereof may be 0.1 or more, 0.5 or more, 1 or more, or 1.1 or more, or 2 or more.

As an example, the flooring material according to an exemplary embodiment of the present invention is characterized in that a change in gloss after rubbing is small.

After a rubbing test is performed 100 times under a load of 90 kg in accordance with KS K ISO 4918, a change in surface gloss under a 60° gloss condition, based on a state before the rubbing test, may be 2 or less, and more specifically, an upper limit thereof may be 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, 0.6 or less, or 0.5 or less, and a lower limit thereof may be 0.1 or more or 0.2 or more.

After a rubbing test is performed 1,000 times under a load of 90 kg in accordance with KS K ISO 4918, a change in surface gloss under a 60° gloss condition, based on a state before the rubbing test, may be 2 or less, and more specifically, an upper limit thereof may be 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, or 0.6 or less, and a lower limit thereof may be 0.1 or more, 0.2 or more, 0.3 or more or 0.4 or more.

After a rubbing test is performed 3,000 times under a load of 90 kg in accordance with KS K ISO 4918, a change in surface gloss under a 60° gloss condition, based on a state before the rubbing test, may be 2 or less, and more specifically, an upper limit thereof may be 1.9 or less, 1.8 or less, 1.7 or less, 1.6 or less, 1.5 or less, 1.4 or less, 1.3 or less, 1.2 or less, 1.1 or less, 1 or less, 0.9 or less, or 0.8 or less, and a lower limit thereof may be 0.1 or more, 0.2 or more, 0.3 or more or 0.4 or more.

In addition, after a rubbing test is performed 1,000 times using a crockmeter, a change in surface gloss under a 60° gloss condition, based on a state before the rubbing test, may be 2 or less, and more specifically, an upper limit thereof may be 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, 0.6 or less, 0.5 or less, 0.4 or less, 0.3 or less, 0.2 or less, or 0.1 or less, and a lower limit thereof may be 0 or more, greater than 0, or 0.1 or more.

As another example, after a rubbing test is performed 100 times under a load of 90 kg in accordance with KS K ISO 4918, a change in surface gloss under a 85° gloss condition, based on a state before the rubbing test, may be 2 or less, and more specifically, an upper limit thereof may be 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, 0.6 or less, or 0.5 or less, and a lower limit thereof may be 0.1 or more or 0.2 or more.

After a rubbing test is performed 1,000 times under a load of 90 kg in accordance with KS K ISO 4918, a change in surface gloss under a 85° gloss condition, based on a state before the rubbing test, may be 4 or less, and more specifically, an upper limit thereof may be 3.9 or less, 3.8 or less, 3.7 or less, 3.6 or less, 3.5 or less, 3.4 or less, 3.3 or less, 3.2 or less, 3.1 or less, 3 or less, or 2.9 or less, and a lower limit thereof may be 0.1 or more, 0.2 or more, 0.3 or more, or 0.4 or more.

After a rubbing test is performed 3,000 times under a load of 90 kg in accordance with KS K ISO 4918, a change in surface gloss under a 85° gloss condition, based on a state before the rubbing test, may be 4 or less, and more specifically, an upper limit thereof may be 3.9 or less, 3.8 or less, 3.7 or less, 3.6 or less, 3.5 or less, or 3.4 or less, and a lower limit thereof may be 0.1 or more, 0.2 or more, 0.3 or more, or 0.4 or more.

In addition, after a rubbing test is performed 1,000 times using a crockmeter, a change in surface gloss under an 85° gloss condition, based on a state before the rubbing test, may be 2 or less.

Such a surface treatment layer may have an average thickness within an appropriate range that does not affect durability. For example, the surface treatment layer may have an average thickness of 5 µm to 30 µm so as not to be torn or lost due to external stimuli, and more specifically, the surface treatment layer may have an average thickness of 5 µm to 30 µm, 5 µm to 15 µm, 10 µm to 20 µm, 10 µm to 30 µm, 20 µm to 30 µm, 8 µm to 17 µm, 11 µm to 20 µm, or 12 µm to 18 µm. In the present invention, the average thickness of the surface treatment layer referred to herein may refer to an average thickness of the surface treatment layer excluding the height of dense wrinkles, and in some cases may refer to a thickness including the average thickness of the surface treatment layer excluding the height of dense wrinkles and one-half of an average maximum height of the dense wrinkles.

Meanwhile, the flooring material according to an exemplary embodiment of the present invention may further include a separate layer in addition to the base layer and the surface treatment layer, and may further include, for example, one or more of a foam layer, a printed layer, and a dimensional stability layer.

The flooring material according to an exemplary embodiment of the present invention may further include one or more of a printed layer and a dimensional stability layer between the base layer and the surface treatment layer.

The flooring material according to another exemplary embodiment of the present invention may further include a foam layer. In this case, the foam layer may be provided on a surface of the base layer opposite to a surface on which the surface treatment layer is provided, and more specifically, the flooring material may include a foam layer, a base layer, and a surface treatment layer sequentially laminated. In addition, at least one of a printed layer and a dimensional stability layer may be further included, and for example, the flooring material may include a foam layer, a printed layer, a base layer, and a surface treatment layer sequentially laminated, or may include a foam layer, a dimensional stability layer, a printed layer, a base layer, and a surface treatment layer sequentially laminated.

Here, the base layer, the printed layer, and the dimensional stability layer may be formed, for example, by subjecting each composition, which includes at least one selected from the group consisting of a binder resin, an initiator, a curing agent, other additives, and combinations thereof, to photocuring or thermal curing, or may be formed as a film or a sheet using an extrusion method, a calendering method, or the like. In addition, types and contents of components included in each of the compositions may be appropriately adjusted according to properties and functions of each layer, and are not particularly limited. Specifically, the flooring material may be formed by applying a predetermined composition to one surface of any one layer and then subjecting the composition to photocuring or thermal curing, or may be formed by forming each layer as a film or a sheet and then laminating the layers using a lamination process known in the art, but is not limited thereto. In addition, the binder resin may include a synthetic resin, a bio-based resin, or both, and may include, for example, a polyvinyl chloride (PVC)-based resin, a polyurethane-based resin, a polylactic acid-based resin, a polyolefin resin, and the like.

In an exemplary embodiment of the present invention, the base layer is a layer located at a lowermost portion of the flooring material and supports a surface treatment layer, a printed layer, a dimensional stability layer, and the like of an upper portion. In addition, an average thickness of the base layer may be from 0.5 to 10T, more specifically, from 0.5 to 8T, from 0.5 to 6T, from 0.5 to 4T, from 4 to 10T, from 6 to 10T, from 8 to 10T, from 3 to 6T, from 4 to 7T, from 7 to 9T, from 2 to 3T, or from 0.5 to 1.5T. In this case, the unit 'T' refers to mm. In addition, components of the base layer are not particularly limited, but may include polyvinyl chloride (PVC), thermoplastic polyurethane (TPU), nitrile-butadiene rubber (NBR), polyvinyl ether (PVE), ethylene vinyl acetate (EVA), polyurethane (PU), and the like.

In addition, the base layer may be a transparent or translucent polyvinyl chloride (PVC) layer and may have a thickness of about 0.05 mm to about 2.0 mm, and when the thickness falls within the above range, a pattern or a design of a printed layer laminated at a lower portion may be sufficiently protected, as described below, without excessively increasing a total thickness of the flooring material.

In another exemplary embodiment of the present invention, the flooring material may be a tile. In this case, the base layer may be a ceramic layer. The ceramic layer is a layer containing ceramic and is manufactured from a composition containing ceramic. Such a ceramic layer is manufactured by shaping non-metallic inorganic particles, which are ceramic components, through agglomeration, and firing the shaped body at a high temperature. In this case, the composition may further include a binder resin, an organic solvent, other additives, and the like, in addition to the non-metallic inorganic particles.

In addition, the printed layer may include a white layer forming a base and a transfer layer for implementing a pattern, and may, for example, be formed by imparting a pattern using various methods such as transfer printing, gravure printing, screen printing, offset printing, rotary printing, or flexographic printing. In this case, the printed layer may have an average thickness of about 1 µm to about 10 µm.

In addition, the dimensional stability layer may be formed from a composite material in which glass fibers are impregnated in a binder resin. The dimensional stability layer formed as described above can reduce dimensional strain even under high-temperature and high-humidity conditions, thereby achieving excellent dimensional stability, and can maintain adhesion with other layers laminated at upper and lower portions at a high level, thereby achieving excellent durability. In this case, an average thickness of the dimension stability layer may be from about 0.1 mm to about 2.0 mm.

Furthermore, the foam layer is a layer located at a lowermost portion of the flooring material, and has functions of supporting a surface treatment layer, a base layer, a printed layer, a dimensional stability layer, and the like of the upper portion, and absorbing impact and noise from upper and lower portions
due to pores of a predetermined size. In this case, an average size of the pores may be from 100 to 900 µm, specifically, from 100 to 800 µm, from 100 to 700 µm, from 100 to 600 µm, from 100 to 500 µm, from 200 to 900 µm, from 300 to 900 µm, from 400 to 900 µm, from 500 to 900 µm, from 600 to 900 µm, from 200 to 800 µm, from 500 to 800 µm, from 600 to 700 µm, from 200 to 400 µm, or from 750 to 900 µm. In addition, an average thickness of the foam layer may be from 0.5 to 10T, more specifically, from 0.5 to 8T, from 0.5 to 6T, from 0.5 to 4T, from 4 to 10T, from 6 to 10T, from 8 to 10T, from 3 to 6T, from 4 to 7T, from 7 to 9T, from 2 to 3T, or from 0.5 to 1.5T. In addition, components of the foam layer are not particularly limited, but may include polyvinyl chloride (PVC), thermoplastic polyurethane (TPU), nitrile-butadiene rubber (NBR), polyvinyl ether (PVE), ethylene vinyl acetate (EVA), polyurethane (PU), and the like.

In addition, a method of applying a composition onto a base may be performed by a method known in the art, and may, for example, be performed using a Mayer rod, a D-bar, a rubber roll, a G/V roll, an air knife, a slot die, a micro gravure, or the like.

A three-step curing method for curing the surface treatment layer may include: a first light irradiation step of irradiating an acrylic resin composition applied on a base layer with light having a wavelength of 100 nm to 450 nm in air to cure a surface of the composition,
a second light irradiation step of irradiating the surface-cured composition with light having a wavelength of less than 300 nm under a nitrogen gas (N₂) condition to induce wrinkles on a surface of the surface-cured composition, and a third light irradiation step of irradiating the composition having wrinkles induced on the surface with light having a wavelength of 100 nm to 450 nm to form a surface treatment layer.

A method for manufacturing a flooring material according to an exemplary embodiment of the present invention includes a step of curing an acrylic resin composition by irradiating the acrylic resin composition with short-wavelength light within a specific range in three stages under different conditions. Here, "short wavelength" is a term distinguished from "long wavelength," and refers to a wavelength having high energy and a short wavelength, and refers to UV, X-ray, and the like, which have wavelengths shorter than that of blue light in the visible spectrum, and light having a wavelength of 400 nm or less, and further, light having a wavelength of 100 nm to 450 nm is used. This is a term different from "narrow wavelength band" and "broad wavelength band," which are distinguished based on a range of an emission spectrum of a light source described below.

Specifically, the first light irradiation step is a first step of irradiating an acrylic resin composition applied on a base with light, and a surface of the acrylic resin composition is cured by applying ultraviolet (UV) energy. In this case, the surface curing imparts a fixing force to such an extent that the entire applied composition is not cured, thereby allowing wrinkles to be formed through a step to be described below and preventing the applied composition from flowing down.

The first light irradiation step is a step of semi-curing a surface treatment layer by applying ultraviolet (UV) energy to the surface treatment layer, and may be performed by irradiating light having a wavelength of 100 to 450 nm, specifically 100 nm or more and less than 200 nm, 100 nm or more and 190 nm or less, 100 nm or more and less than 180 nm, 200 to 400 nm, 250 to 380 nm, 280 to 380 nm, 250 to 350 nm, or 280 to 320 nm, under an air condition. In this case, a surface temperature of the composition and/or the surface treatment layer may be from 20 to 90°C, specifically from 20 to 80°C or from 30 to 70°C.

For the light source used in the first light irradiation step, a light source that emits light of a broad wavelength band that emits all or part of light within a range of 100 to 450 nm is used. When a light source of a broad wavelength band is used as described above, surface curing can be more easily controlled. For example, a mercury lamp, a gallium lamp, or a metal halide lamp having an emission spectrum of a broad wavelength band within a range of 100 to 450 nm may be used.

On the other hand, if the first light irradiation step is performed using a light source of a narrow wavelength band within a long-wavelength (365 nm to 405 nm) region of UV, such as an LED, wrinkles are formed in a sharp shape, for example, a pointed shape, so that contaminants are more easily fixed to the surface treatment layer, and stain resistance may be reduced.

In the first light irradiation step, a light irradiation amount may be from 1 mJ/cm² to 800 mJ/cm², specifically, from 1 mJ/cm² to 700 mJ/cm², from 1 mJ/cm² to 600 mJ/cm², from 1 mJ/cm² to 500 mJ/cm², from 1 mJ/cm² to 150 mJ/cm², from 1 mJ/cm² to 90 mJ/cm², from 90 mJ/cm² to 400 mJ/cm², from 90 mJ/cm² to 300 mJ/cm², from 90 mJ/cm² to 200 mJ/cm², or from 95 mJ/cm² to 105 mJ/cm².

When the same light source is used, as a distance of the light source from the composition and/or the surface treatment layer increases, the light amount decreases, and as the distance of the light source from the composition and/or the surface treatment layer decreases, the light amount increases. Therefore, to control the light amount irradiated onto the composition and/or the surface treatment layer, not only the light amount of the light source itself but also a change in the light amount depending on the distance should be considered.

As another example, in the first light irradiation step, the distance between the composition and/or surface treatment layer and the light source may be from 0.5 to 100 mm, specifically, from 0.5 to 80 mm, from 0.5 to 60 mm, from 0.5 to 40 mm, from 5 to 80 mm, from 5 to 60 mm, from 5 to 40 mm, from 10 to 70 mm, from 10 to 50 mm, from 10 to 30 mm, from 20 to 80 mm, from 20 to 60 mm, from 20 to 50 mm, from 20 to 30 mm, from 25 to 75 mm, from 50 to 80 mm, from 40 to 60 mm, or from 45 to 55 mm. When the distance between the surface treatment layer and the light source is satisfied, appropriate curing is achieved without over-curing, and thus gloss of the surface may decrease, and when the distance condition is not satisfied, over-curing is caused, and thus gloss may increase.

In the present specification, the first light irradiation step may be performed in an oxygen atmosphere, an air atmosphere, or a nitrogen atmosphere.

As an example, the first light irradiation step may be performed by irradiating the composition and/or the surface treatment layer with light having a wavelength of 100 to 450 nm under an air condition at a light irradiation amount of 1 to 800 mJ/cm² for a very short time of 1 to 2 seconds, and the distance between the composition and/or the surface treatment layer and the light source may be from 0.5 to 60 mm.

The second light irradiation step is a step of increasing a scattering rate of light incident on the surface by causing the surface of the applied acrylic resin composition and/or a cured product thereof to be contracted by an excimer generated by the irradiated light, thereby forming wrinkles. The present invention can increase a scattering rate of light by contracting a surface of an acrylic resin composition and/or a cured product thereof into a dense wrinkle form described above using an excimer, and thus can reduce gloss of the surface treatment layer even with a very small amount of a matting agent or, in some cases, even without using a matting agent.

In addition, the second light irradiation step may be performed using light having a wavelength of less than 300 nm, specifically 100 to 200 nm or 150 to 195 nm, which has high energy, in a nitrogen (N₂) atmosphere including a small amount of oxygen (O₂). Specifically, in the second light irradiation step, a concentration of oxygen (O₂) included in the nitrogen (N₂) atmosphere may be from 10 to 30,000 ppm, specifically from 10 to 20,000 ppm, from 10 to 5,000 ppm, from 1,000 to 2,000 ppm, from 2,000 to 3,000 ppm, from 3,000 to 4,000 ppm, from 4,000 to 5,000 ppm, from 10 to 2,000 ppm, from 10 to 1,000 ppm, from 10 to 500 ppm, from 100 to 300 ppm, from 10 to 200 ppm, from 50 to 150 ppm, from 80 to 120 ppm, from 4,000 to 6,000 ppm, from 4,500 to 5,500 ppm, or from 4,800 to 5,200 ppm. In addition, in the second light irradiation step, a distance between the acrylic resin composition and the light source may be from 50 to 150 mm, specifically from 5 to 80 mm, from 5 to 60 mm, from 5 to 40 mm, from 10 to 70 mm, from 10 to 50 mm, from 10 to 30 mm, from 20 to 80 mm, from 20 to 60 mm, from 20 to 50 mm, from 20 to 30 mm, from 25 to 75 mm, from 50 to 80 mm, from 40 to 60 mm, or from 45 to 55 mm.

In addition, the light irradiation amount in the second light irradiation step may be from 25 mJ/cm² to 75 mJ/cm², specifically, from 25 mJ/cm² to 70 mJ/cm², from 25 mJ/cm² to 50 mJ/cm², from 50 mJ/cm² to 75 mJ/cm², from 40 mJ/cm² to 60 mJ/cm², from 25 mJ/cm² to 45 mJ/cm², from 35 mJ/cm² to 45 mJ/cm², or from 38 mJ/cm² to 43 mJ/cm².

As an example, the second light irradiation step may be performed by irradiating the acrylic resin composition with light having a wavelength of 172±5 nm in a nitrogen (N₂) atmosphere including 1000 ppm of oxygen (O₂) at a light amount of 45 to 55 mJ/cm² (i.e., light irradiation amount) for a very short time of 1 to 2 seconds in order to cure the composition. In this case, the distance between the composition and/or surface treatment layer and the light source may be 100±1 mm.

The present invention can easily control an average diameter, a height, and/or a frequency of a dense wrinkle form on the surface of the surface treatment layer by controlling a gas condition, a distance between the composition and the light source, and/or a light irradiation amount within the above ranges when the second light irradiation step is performed. In an exemplary embodiment of the present invention, when the base layer is a film or a sheet, that is, when the flooring material is a sheet product, an excessive increase in curing density of the surface treatment layer can be prevented, thereby preventing the surface treatment layer from fracturing readily at a low temperature, by controlling a gas condition, a distance between the composition and the light source, and/or a light irradiation amount within the above ranges when the second light irradiation step is performed.

In addition, the third light irradiation step is a step of performing full curing by additionally irradiating the activated composition and/or surface treatment layer with ultraviolet (UV), and light having a wavelength of 100 to 450 nm, specifically 100 nm or more and less than 200 nm, 100 nm or more and 190 nm or less, 100 nm or more and less than 180 nm, 200 to 400 nm, 250 to 380 nm, 280 to 380 nm, 250 to 350 nm, or 280 to 320 nm may be used.

In the present specification, the third light irradiation step may be performed in an oxygen atmosphere, an air atmosphere, or an inert atmosphere. In this case, the air atmosphere refers to an ambient air atmosphere having an oxygen concentration of about 21%, that is, a natural air state without artificial treatment, and the oxygen atmosphere refers to an artificial air state in which the concentration of oxygen is increased relative to the air atmosphere.

A gas used to create the inert atmosphere may be, for example, He, Ne, Ar, and/or N₂. Here, the inert atmosphere may be a nitrogen atmosphere. The nitrogen atmosphere refers to an artificial air condition in which the concentration of nitrogen is higher than that of an air atmosphere in which nitrogen is 78%. When the third light irradiation step is performed in a nitrogen atmosphere, the step may be performed in a nitrogen (N₂) atmosphere including a small amount of oxygen (O₂). Here, a concentration of oxygen (O₂) included in the nitrogen (N₂) atmosphere may be from 10 to 30,000 ppm, specifically from 10 to 5,000 ppm, from 1,000 to 2,000 ppm, from 2,000 to 3,000 ppm, from 3,000 to 4,000 ppm, from 4,000 to 5,000 ppm, from 100 to 1,000 ppm, from 100 to 500 ppm, from 100 to 200 ppm, from 10 to 2,000 ppm, from 10 to 1,000 ppm, from 10 to 500 ppm, from 100 to 300 ppm, from 10 to 200 ppm, from 50 to 150 ppm, from 80 to 120 ppm, from 15,000 to 25,000 ppm, from 17,000 to 23,000 ppm, from 19,000 to 21,000 ppm, or from 19,500 to 20,500 ppm. The present invention can not only improve a curing rate of the composition and/or the surface treatment layer by controlling a concentration of oxygen (O₂) within the above range in the third light irradiation step in which full curing is performed, but also induce an effect of cleaning the surface of the surface treatment layer through conversion of oxygen molecules (O₂) into ozone (O₃).

As an example, the third light irradiation step may be performed by irradiating the composition and/or the surface treatment layer with light having a wavelength of 100 to 450 nm at a light amount of 100 to 3,000 mJ/cm², and, in this case, the distance between the composition and/or the surface treatment layer and the light source may be from 100±1 mm.

The light irradiated in the present invention may be irradiated according to a known method capable of irradiating light having a wavelength required in each step. For example, light having a broad wavelength band in a UV region of 400 nm or less may be irradiated using a mercury lamp, a gallium lamp, or a metal halide lamp. In this case, mercury is a light source having a maximum emission wavelength (λmax) in the upper 200 nm range, gallium is a light source having a maximum emission wavelength (λmax) within a range of 350 nm to 450 nm, and metal halide is a light source having a maximum emission wavelength (λmax) within a range of 300 nm to 399 nm.

In addition, the light irradiation time in the present invention may be a very short time of 1 to 2 seconds, and such a light irradiation time may be controlled by a moving speed of the composition during light irradiation, for example, a moving speed of the composition coated on a base. For example, a moving speed of the composition and/or a base coated with the composition may be from 1 to 50 m/min, specifically from 5 to 40 m/min, from 10 to 40 m/min, from 20 to 40 m/min, from 30 to 40 m/min, from 15 to 25 m/min, from 5 to 15 m/min, from 15 to 20 m/min, from 35 to 40 m/min, or from 18 to 22 m/min.

The present invention can exhibit a high curing rate even when the initiator is included in a small amount within the specific range, by stepwise applying short-wavelength light in a specific range under different conditions during curing of the composition.

Note that the acrylic resin composition may include an acrylic-based oligomer and an acrylic-based monomer.

The acrylic-based oligomer refers to an oligomer obtained using a monomer including an acrylic group, and the monomer may be one or more (meth)acrylates selected from the group consisting of methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, and benzyl acrylate. For example, the acrylic-based oligomer may include methyl acrylate oligomer, (meth)acrylate oligomer, methyl (meth)acrylate oligomer, ethyl acrylate oligomer, benzyl acrylate oligomer, benzyl (meth)acrylate oligomer, and the like, which are obtained by polymerizing methyl acrylate, (meth)acrylate, ethyl acrylate, benzyl acrylate, or a mixture thereof.

A weight-average molecular weight of the acrylic-based oligomer may be from 100 to 50,000, more specifically from 500 to 30,000, from 1,000 to 10,000, from 5,000 to 10,000, from 6,000 to 8,000, from 1,000 to 5,000, or from 1,500 to 2,500. The present invention can further improve durability of the cured layer by controlling the weight-average molecular weight of the acrylic-based oligomer within the above range. In this case, a unit of the molecular weight may be expressed in g/mol, but may be omitted.

The polyfunctional acrylic-based monomer is a compound including a linear or branched alkyl group having 1 to 7 carbon atoms and an acrylic group, and may be classified into monofunctional and polyfunctional according to the number of acrylic groups included in the compound. For example, when the compound includes two or more acrylic groups, it may be classified as polyfunctional, and the polyfunctional acrylic-based monomer used in the present invention may include one or more of difunctional monomers, trifunctional monomers, tetrafunctional monomers, and hexafunctional monomers.

As an example, the polyfunctional acrylic-based monomer may include one or more selected from the group consisting of 1,6-hexanediol diacrylate, tetraethylene glycol diacrylate, tripropylene glycol diacrylate, triethylene glycol diacrylate, dipropylene glycol diacrylate, pentaerythritol triacrylate, trimethylolpropane ethoxy triacrylate, and hexamethylenediamine diacrylate.

The acrylic-based monomer may include a difunctional first acrylate monomer, and may further include 30 to 50 parts by weight of a polyfunctional second acrylate monomer based on 100 parts by weight of the difunctional first acrylate monomer.

The acrylic-based oligomer may include 30 to 140 parts by weight of a polyfunctional first acrylate oligomer based on 100 parts by weight of a difunctional first acrylate monomer.

The acrylic-based oligomer may include 30 to 50 parts by weight of a monofunctional second acrylate oligomer based on 100 parts by weight of a difunctional first acrylate monomer.

The acrylic resin composition may not include a matting agent or may include the matting agent in a small amount. Specifically, the matting agent, which has a particulate form, may impart a matte effect to the film by increasing a scattering rate of light at the surface of the film. However, use of the matting agent increases stain resistance as described above. However, since the cured layer of the present application has the surface characteristics described above, matte properties can be effectively achieved. Therefore, sufficient matte properties can be achieved in the film of the present application without using a matting agent used in the related art to achieve a matte effect.

In addition, even when a matting agent is used, the matting agent may be used in an amount smaller than that used in the related art to achieve matte properties. That is, according to the present application, the amount of the matting agent used can be significantly reduced. For example, the matting agent may be used in an amount of 1 to 10 parts by weight based on 100 parts by weight of a difunctional first acrylate monomer. Specifically, the acrylic resin composition may include the matting agent component in an amount of 9 parts by weight or less, specifically 8 parts by weight or less, 7 parts by weight or less, 6 parts by weight or less, 5 parts by weight or less, 4 parts by weight or less, 3 parts by weight or less, or 2 parts by weight or less, based on 100 parts by weight of a difunctional first acrylate monomer. Accordingly, the film of the present application can prevent problems such as reduction in stain resistance due to use of the matting agent.

The acrylic resin composition may further include a silicone additive. The silicone additive is not silica and is an organic compound containing Si. The silicone additive may be a low-molecular-weight silicone additive having a molecular weight of about 100 g/mol or a high-molecular-weight amphiphilic silicone additive. In this case, a molecular weight of the high-molecular-weight amphiphilic silicone additive may be from 30,000 g/mol to 90,000 g/mol.

In addition, the silicone additive may be used in a small amount. Specifically, the silicone additive may be used in an amount of 0.01 to 5 parts by weight, more specifically 0.1 to 4 parts by weight, 0.1 to 3 parts by weight, 0.1 to 2 parts by weight, 0.5 to 1.5 parts by weight, 0.1 to 1.1 parts by weight, or 0.7 to 1.3 parts by weight, based on 100 parts by weight of the difunctional first acrylate monomer.

When the silicone additive is used, the surface tension of the acrylic resin composition decreases, resulting in reduction in wax affinity of the surface treatment layer. However, the present invention can improve stain resistance of the surface treatment layer formed using the acrylic resin composition by appropriately lowering the surface tension of the acrylic resin composition by introducing a fine wrinkle structure on the surface of the surface treatment layer and controlling the amount of the silicone additive within the above range, while minimizing reduction in wax affinity. In addition, the present invention can prevent a significant reduction in curing rate caused by an excessive amount of the silicone additive.

The composition may further include an initiator (C). The type of initiator is not particularly limited as long as it can be used in a curing process described below, and a commercially available product may also be used.

An amount of the initiator is not particularly limited. For example, the composition may include the initiator in an amount of 20 parts by weight or less. Specifically, the amount of the initiator may be 15 parts by weight or less, 10 parts by weight or less, 5 parts by weight or less, 4 parts by weight or less, 3 parts by weight or less, 2 parts by weight or less, or 1 part by weight or less. In addition, a lower limit of the amount may be, for example, 0.1 parts by weight or more, 1 part by weight or more, 2 parts by weight or more, 3 parts by weight or more, 4 parts by weight or more, or 5 parts by weight or more. As described below, in the present application, since stepwise curing is performed when curing the cured layer, curing efficiency is excellent even when a small amount of the initiator is used.

The composition may further include a dispersant, the type of dispersant is not particularly limited, and a commercially available product may also be used. An amount of the dispersant is not particularly limited. For example, the composition may include the dispersant in an amount of 5 parts by weight or less based on 100 parts by weight of a difunctional first acrylate monomer. Specifically, the amount of the dispersant may be 4 parts by weight or less, 3 parts by weight or less, 2 parts by weight or less, or 1 part by weight or less. In addition, a lower limit of the amount may be, for example, 0.01 parts by weight or more, 0.05 parts by weight or more, 0.1 parts by weight or more, 0.2 parts by weight or more, 0.5 parts by weight or more, or 1 part by weight or more.

The method for manufacturing a flooring material may further include an embossing step of bringing an embossing roll having a protrusion pattern into contact with the surface of the surface treatment layer of the flooring materialto form, on the surface treatment layer, an embossed pattern corresponding to the protrusion pattern of the embossing roll.

The embossing may be formed in a recessed form through a process of applying pressure while passing the surface treatment layer over a rotating embossing roll or between a pair of embossing rollers. More specifically, the pair of embossing rolls maintain a predetermined gap so as to form embossing with a constant pressing force without crushing an upper surface of the surface layer pressed in one direction.

An outer peripheral surface of the embossing roll is provided with a protrusion pattern formed by projections having a predetermined shape for forming embossing by pressing one surface of the surface treatment layer. Here, when a pair of embossing rolls is provided, the projections may be formed on a roller provided on an upper side.

The embossing roll receives power from a motor (not illustrated) provided on one side, rotates at a constant speed, and repeatedly forms embossing in the form of any one of a wood grain pattern or various patterns along a longitudinal direction of the upper surface of the surface treatment layer introduced from one side.

A height of the protrusion pattern of the embossing roll may be 50 µm or more and 500 µm or less. A height of an embossed pattern formed corresponding to the protrusion pattern, that is, a depth of embossing, is determined by the height of the protrusion pattern of the embossing roll, and the height of the embossed pattern may be 50 µm or more and 500 µm or less.

### [Best Mode]

The present invention will be described in more detail below with reference to examples. However, it should be understood that the following examples are intended only to illustrate the present invention and are not intended to limit the present invention.

### [Examples]

### Preparation Examples 1 to 4 Preparation of Acrylic Resin Composition

A first acrylic monomer (difunctional monomer), a second acrylic monomer (polyfunctional monomer), a first acrylic oligomer (polyfunctional oligomer), a second acrylic oligomer (monofunctional oligomer), colloidal silica (average diameter: 5 to 10 µm) as a filler, and a dispersant were mixed together with Irgacure 754, which is an initiator, as shown in Table 1 below, to prepare a solvent-free acrylic resin composition.

**[Table 1]**

| | Preparation Example 1 | Preparation Example 2 | Preparation Example 3 |
|---|---|---|---|
| First acrylic monomer (difunctional) | 35 g | 35 g | 35 g |
| Second acrylic monomer (polyfunctional) | 15 g | 15 g | 15 g |
| First acrylic oligomer (polyfunctional) | 35 g | 35 g | 35 g |
| Second acrylic oligomer (monofunctional) | 15 g | 15 g | 15 g |
| Colloidal silica | 3 g | 15 g | 3 g |
| Dispersant | 1 g | 1 g | 1 g |
| Irgacure 754 | 4 g | 4 g | 4 g |
| Silicone additive | 1 g | 1 g | 0 g |

### Example 1

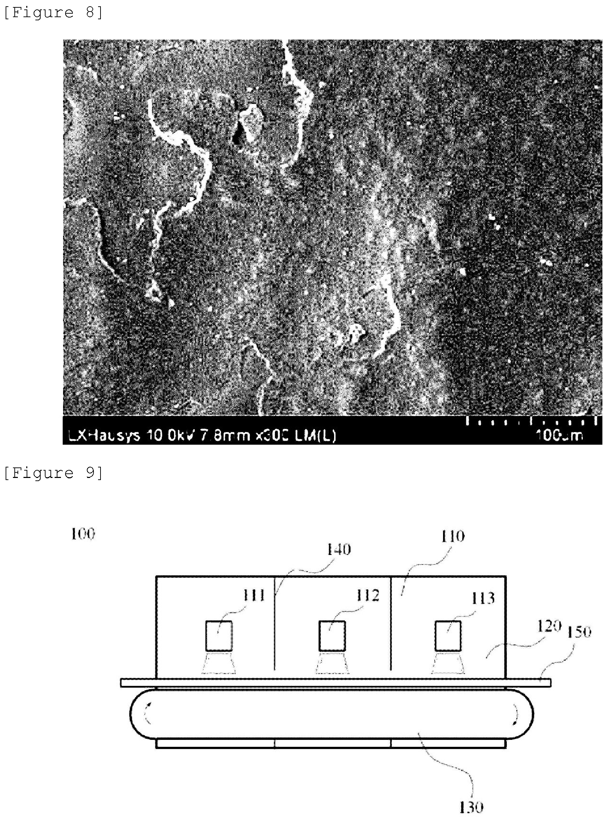

A flooring material specimen was prepared by applying, respectively, the acrylic resin composition prepared in Preparation Example 1 onto a base in which a polyvinyl chloride (PVC)-based flooring tile having a size of 20 cm in width and 30 cm in length and a transparent polyvinyl chloride (PVC) film were laminated, fixing a photocuring apparatus having a structure as illustrated in FIG. 9, and then stepwise performing light irradiation while moving the base at a speed of 20±1 m/min under conditions as shown in Tables 2 and 3 below. In this case, an average thickness of the surface treatment layer was 15±1 um. In Table 3 below, light sources used for the first and third light irradiation were mercury lamps having an emission spectrum within a range of 200 to 450 nm.

**[Table 2]**

| | Example 1 |
|---|---|
| Type of acrylic composition | Composition of Preparation Example 1 |
| Curing condition | Curing condition 1 |

**[Table 3]**

| | | Curing condition 1 |
|---|---|---|
| First light irradiation | Wavelength range | 200 to 450 nm |
| | Irradiation amount | 100±5 mJ/cm² |
| | Distance from light source | 50±1 mm |
| | Gas condition | Air condition |
| Second light irradiation | Wavelength range | 172±5 mm |
| | Irradiation amount | 50±5 mJ/cm² |
| | Distance from light source | 100±1 mm |
| | Gas condition | N₂ condition (O₂ 1,000 ppm) |
| Third light irradiation | Wavelength range | 200 to 450 nm |
| | Irradiation amount | 700±10 mJ/cm² |
| | Distance from light source | 100±1 mm |
| | Gas condition | N₂ condition |

### Comparative Examples 1 to 3

flooring material specimens were prepared by performing the same method as in Example 1, except that the composition was cured under conditions as shown in Tables 4 and 5 below. In this case, an average thickness of the surface treatment layer was 15±1 µm.

**[Table 4]**

| | Comparative Example 1 | Comparative Example 2 | Comparative Example 3 |
|---|---|---|---|
| Type of acrylic composition | Composition of Preparation Example 1 | | Composition of Preparation Example 2 |
| Curing condition | Curing condition 2 | Curing condition 3 | |

**[Table 5]**

| | | Curing condition 2 | Curing condition 3 |
|---|---|---|---|
| | Wavelength range | less than 300 nm | 100 to 450 nm |
| First light irradiation | Irradiation amount | 40±2 mJ/cm² | 700±10 mJ/cm² |
| | Distance from light source | 50±1 mm | 100±1 mm |

| | Gas condition | N₂ condition (O₂ 1,000 ppm) | Air condition |
|---|---|---|---|
| | Wavelength range | 100 to 450 nm | |
| Second light irradiation | Irradiation amount | 700±10 mJ/cm² | - |
| | Distance from light source | 100±1 mm | |
| | Gas condition | Air condition | |

### Experimental Example 1

Gloss, stain resistance (cleanability), stain resistance (KS), and scratch resistance were evaluated for the specimens prepared in Examples 1 and 2 and Comparative Examples 1 to 4. Specific measurement methods were as follows, and the measured results are shown in Table 6 below.

### a) Evaluation of Surface Gloss

Gloss at 60° and 85° (60° and 85° gloss conditions) was measured using a gloss meter for the specimens of the Examples and Comparative Examples.

### b) Evaluation of Stain resistance (cleanability)

The test was performed in accordance with KS M 3802, and a square of about 10 cm × 10 cm was drawn on a surface using an oil-based marker and a board marker as contamination materials. After 30 seconds or more, the drawn square was rubbed and removed using a Kimwipe, and a remaining area (for example, traces or smearing) without being erased based on an initial contaminated area was visually confirmed, and the results were classified according to the following criteria:
- Grade 1: a remaining area of 90% or more based on an initial contaminated area
- Grade 2: a remaining area of 60% or more and less than 90% based on an initial contaminated area
- Grade 3: a remaining area of 20% or more and less than 60% based on an initial contaminated area
- Grade 4: a remaining area of 5% or more and less than 20% based on an initial contaminated area
- Grade 5: a remaining area of less than 5% based on an initial contaminated area

### c) Evaluation of Stain resistance (KS)

The test was performed in accordance with KS M 3802, and evaluation was conducted on an upper surface of a flooring material specimen using 10 types of contamination materials, including soybean oil, lubricating oil, 95% ethanol, cement paste, a 10% aqueous ammonia solution, milk, 5% acetic acid, 5% hydrochloric acid, kerosene, and soy sauce. After wiping the flooring material specimen with a dry cloth, 2 mL of a contaminant was dropped onto the specimen. After confirming that the contaminant spread in a circular shape, the specimen was covered with a watch glass and allowed to stand for 24 hours. Thereafter, the specimen was washed with water containing a neutral detergent and then washed again with ethanol, and the surface of the specimen was wiped clean with dry gauze and allowed to stand for 1 hour, and then a color change, a change in gloss, and swelling of a portion onto which the contaminant was dropped were visually confirmed, and the results were classified according to the following criteria:
- PASS: no color change, change in gloss, or swelling of a portion to which a contaminant was dropped.
- NG: color change, change in gloss, and swelling of a portion to which a contaminant was dropped are present. (indicating changes in color, gloss, and swelling).

### D) Evaluation of Scratch Resistance

Scratch resistance (micro scratch resistance) was evaluated for a surface of a surface treatment layer in accordance with Method B of EN 16094, and micro scratch resistance was evaluated in accordance with Procedure B of EN 16094:2012. Specifically, rubbing was performed 160 times on a surface of a laminated film using a medium fine hand pad (Scotch Brite SB7440). Thereafter, scratches generated on the rubbed surface and whether a pattern was generated due to the scratches were visually confirmed, and grades were assigned according to the following criteria:
Grade B1: no scratches are observed.
Grade B2: fewer than 10 faint scratches are observed.
Grade B3: 10 or more and fewer than 30 faint scratches are observed.
Grade B4: a large number of narrow and fine scratches are observed, and a Lissajous figure caused by the scratches is partially observed.
Grade B5: a large number of narrow and fine scratches are observed, and a Lissajous figure caused by the scratches is observed in a mixed form.

**[Table 6]**

| | Example 1 | Comparative Example 1 | Comparative Example 2 | Comparative Example 3 |
|---|---|---|---|---|
| Gloss (60°) | 3±1 | 5±2 | 10±1 | 6±1 |
| Gloss (85°) | 10±1 | 5±2 | 23±1 | 20±1 |
| Stain resistance (oil-based marker) | Grades 4 and 5 | Grade 4 | Grade 3 | Grade 3 |
| Stain resistance (board marker) | Grade 5 | Grade 5 | Grade 5 | Grade 5 |
| Stain resistance (KS) | PASS | PASS | PASS | PASS |
| Scratch resistance | B1 to B2 | B1 to B2 | B2 | B3 |

### Experimental Example 2

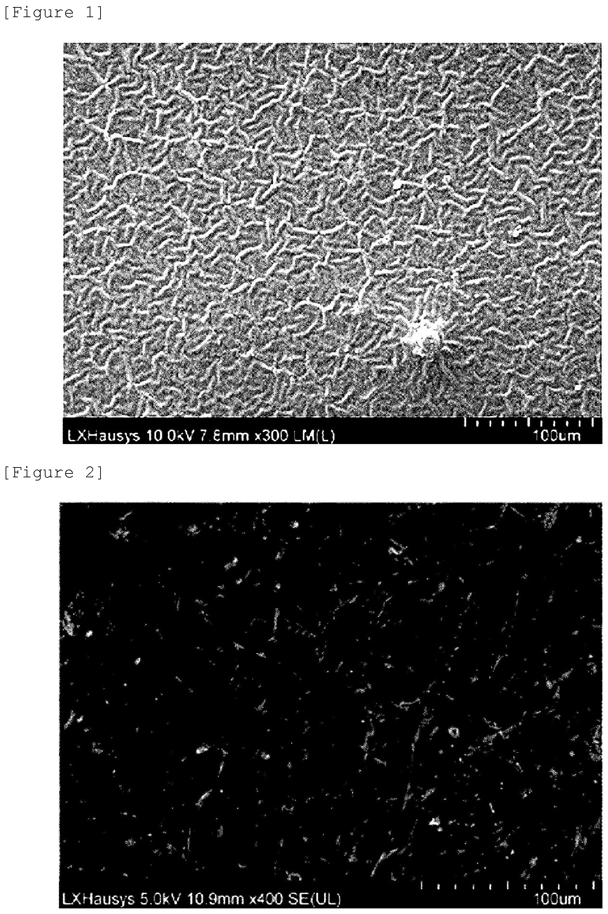

In order to confirm a surface structure of a surface treatment layer, which is an outermost layer of a flooring material according to an exemplary embodiment of the present invention, SEM (scanning electron microscope) analysis was performed for flooring material specimens prepared in Example 1 and Comparative Examples 1 to 3, and the results are shown in FIGS. 1 to 4. As shown in FIG. 1, a wrinkle structure of Example 1 had a width of 3 to 11 µm and a length of about 5 to 20 µm. In addition, the wrinkles were formed very uniformly, and 21 to 100 wrinkles were formed per unit area (0.1 × 0.1 mm). A distance between adjacent peaks of the wrinkles was 1 to 15 µm, and a distance between adjacent valleys of the wrinkles was also 1 to 15 µm.

As shown in FIG. 2, a wrinkle structure of Comparative Example 1 had a width of 10 to 50 µm and a length of about 10 to 50 µm. In addition, the wrinkles were formed non-uniformly depending on an embossing depth, and 5 to 20 wrinkles were formed per unit area (0.1 × 0.1 mm). A distance between adjacent peaks of the wrinkles was 1 to 15 µm, and a distance between adjacent valleys of the wrinkles was also 1 to 15 µm.

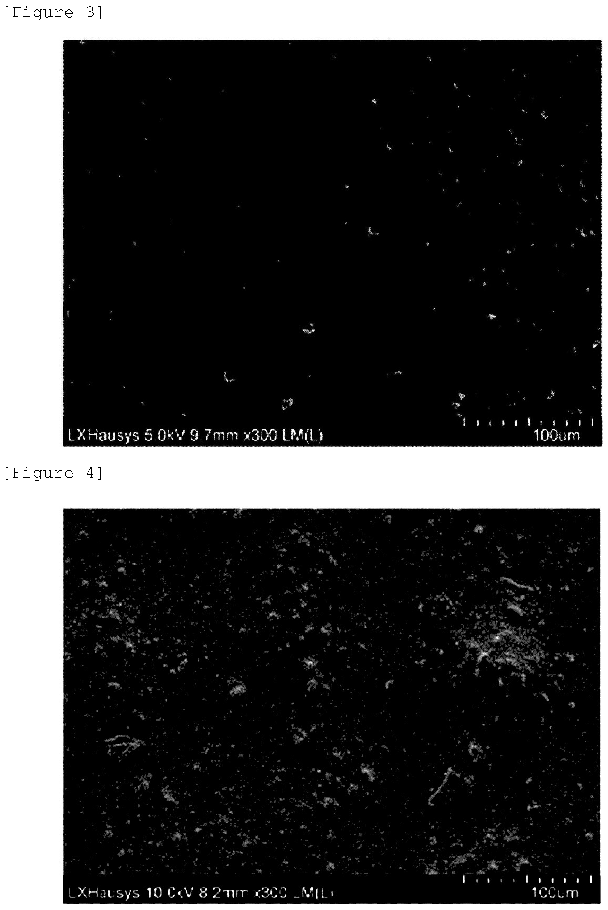

As shown in FIGS. 3 and 4, in Comparative Examples 2 and 3, wrinkles were not formed, and matting agents were exposed on the surface.

### Experimental Example 3

In order to evaluate durability against rubbing of a surface treatment layer, which is an outermost layer of a flooring material according to an exemplary embodiment of the present invention, a rubbing test was performed 1,000 times using a crockmeter for flooring material specimens prepared in Example 1 and Comparative Examples 1 to 3, as shown in Table 7 below. Thereafter, gloss, stain resistance (oil-based marker, board marker), and stain resistance (KS) evaluation results of the specimens are shown in Table 8.

**[Table 7]**

| Sample | Example 2 | Comparative Example 4 | Comparative Example 5 | Comparative Example 6 |
|---|---|---|---|---|
| Specimen for evaluation | Example 1 | Comparative Example 1 | Comparative Example 2 | Comparative Example 3 |
| Evaluation condition | Evaluation of durability against rubbing using crockmeter | | | |

**[Table 8]**

| | Example 2 | Comparative Example 4 | Comparative Example 5 | Comparative Example 6 |
|---|---|---|---|---|
| Gloss (60°) | 3±1 | 5±2 | 9±2 | 6±2 |
| Gloss (85°) | 11±1 | 5±2 | 20±2 | 18±2 |
| Stain resistance (oil-based marker) | Grades 4 and 5 | Grade 4 | Grade 2 | Grade 2 |
| Stain resistance | Grade 5 | Grade 5 | Grade 3 | Grade 3 |
| (board marker) | | | | |
| Stain resistance (KS) | PASS | PASS | NG | NG |
| Scratch resistance | B1 to B2 | B1 to B2 | B3 | B4 |

### Experimental Example 4

The surfaces of the flooring material specimens evaluated in Experimental Example 3 were subjected to SEM (scanning electron microscope) analysis, and the results are shown in FIGS. 5 to 9. FIG. 1, in which an ultra-matte state was achieved by surface wrinkles formed by 3-step curing, shows that a difference in gloss between deep valley and ridges(peaks) of embossing is small, and as shown in FIG. 5, it was confirmed that no particle detachment occurred during rubbing, a change in gloss was small, and no surface change occurred after the evaluation of durability against rubbing (scratch resistance B1 to B2 → B1 to B2).

When ultra-matte is achieved by surface wrinkles formed by 2-step curing as in Comparative Example 1, there is a problem in that, as shown in FIG. 6, wrinkle shapes at valleys and ridges of embossing differ, thereby causing differences in surface gloss and physical properties. In Comparative Example 4, during the evaluation of durability against rubbing, particle detachment was small and scratch resistance remained the same as before rubbing; however, it was confirmed that, because a difference in gloss between ridges and valleys of embossing was large, the difference in gloss between them increased during rubbing.

When an ultra-matte surface treatment layer was prepared by a conventional one-step curing method with addition of a matting agent as in Comparative Examples 2 or 3, it was confirmed, as shown in FIG. 7, that gloss changed due to particle detachment during rubbing. Comparative Example 2 had a surface treatment layer formed from a composition containing a small amount of a matting agent, namely colloidal silica (the composition of Preparation Example 1), and in Comparative Example 5, it was confirmed that a small amount of detachment of the matting agent occurred and scratch resistance decreased from B2 to B3 after the evaluation of durability against rubbing. Comparative Example 3 had a surface treatment layer formed from a composition containing a large amount of a matting agent (the composition of Preparation Example 2), and in Comparative Example 6, it was confirmed that detachment of the matting agent and the coating layer occurred and scratch resistance decreased from B3 to B4 after the evaluation of durability against rubbing.

### Experimental Example 5

In order to conduct a repeated rolling test for a surface treatment layer, which is an outermost layer of a flooring material according to an exemplary embodiment of the present invention, a repeated chair caster rolling test was performed for flooring material specimens prepared in Example 1 and Comparative Examples 1 to 3. The repeated chair caster rolling test was conducted as a simulated test with reference to KS K ISO 4918 (90 kg load applied). Thereafter, gloss evaluation results of the specimens are shown in Table 9.

**[Table 9]**

| | Example 1 | Comparative Example 1 | Comparative Example 2 | Comparative Example 3 |
|---|---|---|---|---|
| Change in gloss (60°, 100 times) | 0.2 | 0.3 | 0.4 | 2.2 |
| Change in gloss (60°, 1000 times) | 0.6 | 1.0 | 1.6 | 3.5 |
| Change in gloss (60°, 3000 times) | 0.8 | 2.2 | 3.0 | 4.3 |
| Change in gloss (85°, 100 times) | 1.3 | 1.7 | 4.1 | 4.6 |
| Change in gloss (85°, 1000 times) | 2.9 | 3.5 | 6.0 | 8.0 |
| Change in gloss (85°, 3000 times) | 3.4 | 4.5 | 7.4 | 10.9 |

### Experimental Example 6

A flooring material specimen was prepared by applying, respectively, the acrylic resin compositions prepared in Preparation Examples 1, 3, and 4 onto a base in which a polyvinyl chloride (PVC)-based flooring tile having a size of 20 cm in width and 30 cm in length and a transparent polyvinyl chloride (PVC) film were laminated, fixing a photocuring apparatus having a structure as illustrated in FIG. 9, and then stepwise performing light irradiation while moving the base at a speed of 20±1 m/min under conditions as shown in Table 10 below. In this case, an average thickness of the surface treatment layer was 15±1 µm.

**[Table 10]**

| | Example 3 | Example 4 | Comparative Example 9 | Comparative Example 10 |
|---|---|---|---|---|
| Type of acrylic composition | Composition of Preparation Example 1 | Composition of Preparation Example 3 | Composition of Preparation Example 1 | Composition of Preparation Example 3 |
| Curing condition | Curing condition 1 | | Curing condition 3 | |

In order to evaluate gloss, stain resistance (cleanability), and stain resistance (KS) of a flooring material according to an exemplary embodiment of the present invention, surface gloss and stain resistance were evaluated in the same manner as in Experimental Example 1 for flooring material specimens prepared in Example 3 and Comparative Examples 7 to 11, and the measured results are shown in Table 11 below.

**[Table 11]**

| | Example 3 | Example 4 | Comparative Example 8 | Comparative Example 9 |
|---|---|---|---|---|
| Gloss (60°) | 3±1 | 3±1 | 11±2 | 12±2 |
| Gloss (85°) | 10±1 | 12±1 | 24±2 | 25±2 |
| Stain resistance (oil-based marker) | Grades 4 and 5 | Grade 3 | Grade 3 | Grade 1 |
| Stain resistance (board marker) | Grade 5 | Grade 5 | Grade 5 | Grade 3 |
| Stain resistance (KS) | PASS | PASS | PASS | NG |

In Example 1, to which 3-step curing was applied, an ultra-matte gloss (simultaneously satisfying gloss of 4 or less at 60° and gloss of 30 or less at 85°) was achieved, and it was confirmed through Example 3 that stain resistance was good due to the addition of a silicone additive. When curing condition 3, which is a general curing condition, was applied, it was confirmed through Comparative Examples 9 to 11 that an ultra-matte gloss could not be achieved even with the same composition, and regardless of whether a silicone additive was included, stain resistance tended to decrease compared with a case in which curing condition 1, which is 3-step curing, was applied.

## Claims

1. A flooring material comprising:
a base layer; and
a surface treatment layer, wherein
the surface treatment layer has
a surface structure comprising 21 to 100 wrinkles per unit area (0.1 mm × 0.1 mm),
a surface gloss of 4 or less under a 60° gloss condition, and
a surface gloss of 30 or less under an 85° gloss condition.

2. The flooring material of claim 1, wherein the surface treatment layer has a change in surface gloss of 2 or less under the 60° gloss condition after a 3,000-cycle rubbing test under a load of 90 kg in accordance with KS K ISO 4918, based on a state before the rubbing test.

3. The flooring material of claim 1, wherein the surface treatment layer has a change in surface gloss of 4 or less under the 85° gloss condition after a 3,000-cycle rubbing test under a load of 90 kg in accordance with KS K ISO 4918, based on a state before the rubbing test.

4. The flooring material of claim 1, wherein a width of the wrinkles of the surface treatment layer is 3 µm or more and 11 µm or less, and a length thereof is 1 µm or more and 30 µm or less.

5. The flooring material of claim 1, wherein, on the surface treatment layer, a distance between any one wrinkle and an adjacent wrinkle is from 1 µm to 15 µm.

6. The flooring material of claim 1, wherein an average thickness of the surface treatment layer is from 5 µm to 30 µm.

7. A method for manufacturing a flooring material, the method comprising:
a first light irradiation step of irradiating an acrylic resin composition applied on a base layer with light having a wavelength of 100 nm to 450 nm in air to cure a surface of the composition;
a second light irradiation step of irradiating the surface-cured composition with light having a wavelength of less than 300 nm under a nitrogen gas (N₂) condition to induce wrinkles on a surface of the surface-cured composition, and
a third light irradiation step of irradiating the composition having wrinkles induced on the surface with light having a wavelength of 100 nm to 450 nm to form a surface treatment layer,
wherein the surface treatment layer has
a surface structure comprising 21 to 100 wrinkles per unit area (0.1 mm × 0.1 mm),
a surface gloss of 4 or less under a 60° gloss condition, and
a surface gloss of 30 or less under an 85° gloss condition.

8. The method of claim 7, wherein a light irradiation amount in the first light irradiation step is from 1 mJ/cm² to 150 mJ/cm².

9. The method of claim 7, wherein the acrylic resin composition comprises, based on 100 parts by weight of a difunctional first acrylate monomer,
30 to 50 parts by weight of a polyfunctional second acrylate monomer,
30 to 140 parts by weight of a polyfunctional first acrylate oligomer,
1 to 10 parts by weight of a matting agent, and
0.01 to 5 parts by weight of a silicone additive.

10. The method of claim 9, wherein the acrylic resin composition further comprises, based on 100 parts by weight of the difunctional first acrylate monomer, one or more of
0.01 to 5 parts by weight of a dispersant,
30 to 50 parts by weight of a monofunctional second acrylate oligomer, and
5 to 20 parts by weight of an initiator.
